Europäisches Patentamt

(19) European Patent Office

Office européen des brevets

(11) Publication number: 0 141 556
A2

# (12) EUROPEAN PATENT APPLICATION

(21) Application number: 84306992.3

(22) Date of filing: 12.10.84

(51) Int. Cl.⁴: **B 26 F 1/26**

(30) Priority: 19.10.83 US 543176

(43) Date of publication of application:
15.05.85 Bulletin 85/20

(84) Designated Contracting States:
AT BE CH DE FR GB IT LI LU NL SE

(71) Applicant: SEARS MANUFACTURING COMPANY
1718 South Concord Street
Davenport Iowa52808(US)

(72) Inventor: Hulsebusch, William H.
330 First Avenue
Dewitt Iowa 52742(US)

(72) Inventor: Hinkhouse, Lysle R.
207 Iowa Street
Wilton Iowa 52778(US)

(74) Representative: Allden, Thomas Stanley et al,
A.A. THORNTON & CO. Northumberland House 303-306
High Holborn
London WC1V 7LE(GB)

(54) Process for developing porosity in air impervious film and articles produced by the process.

(57) A process for developing porosity in air impervious film. The process is disclosed for fabricating a cushion article having a cover provided with increased air flow capabilities. The process includes providing a cushion body in the shape of the article. A covering is provided for at least part of the cushion article, the covering including an air impervious film having heat absorptive particles thereon in at least a selected area thereof. The particles are subjected to heat at a temperature sufficient to produce holes in the film adjacent the particles and to thereby form air flow passages through the film.

FIG. 3

EP 0 141 556 A2

**0141556**

## SPECIFICATION

## PROCESS FOR DEVELOPING POROSITY IN
## AIR IMPERVIOUS FILM AND
## ARTICLES PRODUCED BY THE PROCESS

### Background Of The Invention

This invention relates generally to a method of developing porosity in an air impervious film or laminate. The invention further relates to a cushion article and a process for fabricating the article with a cover having increased air flow capabilities.

One area in which the invention has particular applicability is in the art of fabricating cushion articles. Traditional methods of making upholstered seat cushions, for instance, have involved (1) cutting the cover material according to an appropriate pattern; (2) sewing the cut material; and (3) stuffing the cushion. High labor costs result since, in many instances, the cutting and sewing operations are extensive and most often are performed by hand.

To reduce the costs of manufacturing seat cushions, a molding process was devised for manufacturing seat cushions comprising a foam portion having an integral vinyl cover. The vinyl cover first is heated and then drawn into a cold mold by means of a vacuum between the vinyl and the mold. As the vinyl cools, it assumes the contours of the mold. Foam then is poured into the mold to form the foam portion of the seat cushion. This process significantly reduces manufacturing costs and results in a superior seat.

However, cloth has many advantages over vinyl. Specifically, cloth is water vapor permeable. Perspiration that normally collects behind a person sitting in a vinyl seat can evaporate through cloth so that cloth covered cushions feel cooler during warm weather and warmer during cold weather. Furthermore, the feel of cloth is much more luxurious and elegant.

In recognition of these advantages, a novel molding process was devised for manufacturing seat cushions comprising a foam portion having an integral

- 2 -

cover including an outer cloth layer. Such a process is disclosed in U.S. Patent Nos. 4,247,348 and 4,264,386. In that process the stitch of the fabric layer is set in the mold. This may be accomplished by employing a mold heated to at least the fabric set temperature when the cloth is drawn into the mold. The fabric layer is thereby heated and then allowed to cool. By this process the fabric stitch is set and the cloth is formed to the precise contours of the mold. Foam then is poured into the mold after the cooling step to form an integral seat cushion with a fabric cover. The fabric normally is bonded or laminated to a vinyl film to permit the cover to be vacuum drawn into the mold.

All of the above innovations in the art have resulted in labor savings and improved products. Yet, one of the problems remaining with making seat cushions or other cushion articles by the above process is insufficient air flow through the covering. As stated above, cloth has an advantage over vinyl in that the cloth is water vapor permeable. However, when the cloth is laminated to a vinyl layer to permit vacuum drawing of the laminated cover into the mold, the cloth loses much of its air flow capabilities. In certain fields, such as the automotive industry, this air flow capability is called "breathability".

A common method of providing breathability in covered cushion articles is illustrated in U.S. Patent No. 3,258,511 to McGregor, dated June 28, 1966. In that patent, a cushion article has a cloth cover laminated to an air impervious film. After the cushion article is fabricated, the cover is punctured by a roller having needle-like projections. One of the problems in puncturing a vinyl backed cloth cover is that the projections have a tendency to break the yarn of the fabric, thereby diminishing the durability and appearance of the upholstered cushion.

The present invention contemplates solving these problems by a novel method of developing porosity in an otherwise air impervious film or laminate, thereby providing increased air flow capabilities in such items as cushion articles, particularly articles which include a cover comprising a portion thereof fabricated of air impervious film.

articles, particularly articles which include a cover comprising a portion thereof 0141556

fabricated of air impervious film.

## Summary Of The Invention

An object, therefore, of the preent invention is to provide a process for developing porosity in air impervious films or laminates.

Another object of the invention is to provide a process for fabricating a cushion article having a cover provided with increased air flow capabilities.

A further object of the invention is to provide a cushion article, such as a seat cushion or the like, fabricated in accordance with the process of the invention.

The invention contemplates a process for developing porosity in an otherwise air impervious film. The process includes providing an air impervious meltable film which embodies or has applied to it heat absorptive particles or material. The particles are thereafter heated sufficiently to melt the film in the areas of the particles to form air flow passages through the film.

In the exemplary embodiment of the invention herein, the process is disclosed for use in fabricating a cushion article which includes a cushion body in the shape of the article. A covering is provided for at least part of the cushion body. The covering includes an air impervious meltable film having the heat absorptive particles or material applied thereto in at least a selected area thereof. The particles are heated to a temperature sufficient to melt the film around the particles and form air flow passages through the film.

In the preferred embodiment, the cover includes an outer fabric layer on the outside of the film.

The process of the present invention and the article produced by the process are readily applicable for fabricating seat cushions or the like. As disclosed herein, a mold is provided having the shape of a desired seat cushion. The covering, including the outer fabric layer and the film with the heat absorptive particles, is vacuum drawn into the mold. Foaming material then is poured into the mold and at least partially cured to form the cushion body with the covering. The particles then are heated sufficiently to melt portions of the film and form the air flow passages through the film.

There are various methods of applying the heat absorptive particles or material to the film prior to heating. One method is to apply an adhesive substance to the film to which the heat absorptive particles adhere. The particles can be applied either in a random fashion or by using a template over the film and applying the particles in a selected pattern to create correspondingly patterned air passages. Another method is to provide a laminated film wherein the heat absorptive particles are applied at selected areas between two or more layers of the film and thereafter subjected to heat to melt adjacent film layers. A further method is to produce a film wherein the heat absorptive particles are formed integral with the film, as in extrusion casting or molding processes. Preferably, the film is fabricated of thermoplastic material. The term "particles" is intended to include any heat absorptive and transferring medium. For instance, heat absorptive substances can be painted or printed on the film, or electrostatically applied to the film as in duplicating processes.

It should be understood that the invention is not limited in its applicability to seat cushions. A wide range of applications are contemplated, such as in fabricating acoustical panels, automobile headliners, and many other areas.

Other objects, features and advantages of the invention will be apparent from the following detailed description taken in connection with the accompanying drawings.

Description Of The Drawings

The features of this invention which are believed to be novel are set forth with particularity in the appended claims. The invention, together with its objects and the advantages thereof, may be best understood by reference to the following description taken in conjunction with the accompanying drawings, in which like reference numerals identify like elements in the figures and in which:

- 5 -

FIGURE 1 is a perspective view of a cushion article in the for**01415 56**
cushion incorporating the invention;

FIGURE 2 is a sectional view, on an enlarged scale, through the seat cushion taken generally along line 2-2 of Figure 1;

FIGURE 3 is a fragmented sectional view, on a further enlarged scale, through the seat cushion and taken along line 3-3 of Figure 2, illustrating the laminated cover of the invention;

FIGURE 4 is an exploded perspective view of the various components of one form of the laminated cover of the invention, including the heat absorptive particles as being applied to one side of a film layer of the cover; and

FIGURE 5 is an exploded perspective view of the various components of another form of breathable cover of the invention, incorporating a laminated film having the heat absorptive particles disposed therebetween.

## Detailed Description Of The Preferred Embodiment

The invenion contemplates a novel method or process for developing porosity in otherwise air impervious film. In carrying out the invention, the air impervious nature of the film is utilized for a given purpose, whereafter it is desirable to develop porosity in the film to create air flow passages therethrough. The drawings and the following description exemplify a use of the invention in fabricating cushion articles, such as seat cushions or the like. However, the invention has far reaching utility in a wide range of other applications.

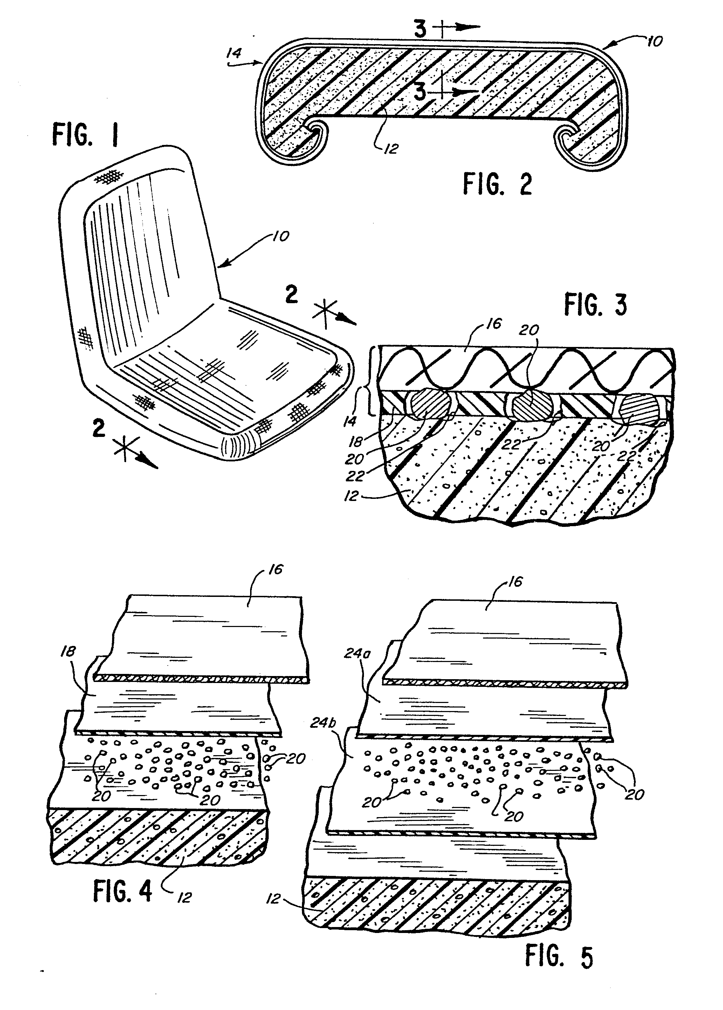

Referring to the drawings in greater detail, and first to Figure 1, the invention is illustrated for use in molding a cushion article, such as a seat cushion generally designated 10, which can be used in countless applications, as in the automotive industry.

Figure 2 illustrates a sectional view through seat cushion 10 to show that the cushion generally includes a foam cushion body 12 substantially surrounded by a covering, generally designated 14.

**0141556**

Figures 3 and 4 illustrate one form of cover 14 of the invention as being a laminated cover comprising an outer fabric layer 16 and an inner film layer 18. It should be understood that the cover can be either single or multiple layered plastic film, or a laminate including plastic film, cloth and open-cell foam. Preferably, the film layer is an air impervious thermoplastic material.

Heat absorptive particles 20 are provided on film layer 18 in at least a selected area thereof. As described hereinafter, the particles are effective to absorb heat to melt film layer 18 about the particles and form air passages 22 (Fig. 3) through the film to provide air flow comfort for the cushion article. It can be seen in Figure 3 that the particles not only melt film layer 18 but may also melt portions of foam cushion body 12 adjacent the particles.

In carrying out the invention, a process is provided for fabricating a cushion article, such as seat cushion 10 or the like, having a cover provided with increased air flow capabilities. A mold is provided having the shape of a desired seat cushion. An example of such a mold is disclosed in copending application Serial No. 511,497, filed July 7, 1983, which is a continuation-in-part of application Serial No. 418,395, filed September 15, 1982, both of which are incorporated herein by reference. Covering 14 first is provided for the seat cushion. The covering may include outer fabric layer 16 bonded integrally to inner film 18. Preferably, the film layer is an air impervious plastic material. The covering then is vacuum drawn into the mold to conform to the interior shape thereof. Heat absorptive particles 20 can be applied to film layer 18 either before or after the covering is placed into the mold. As described above, the particles can be fixed to the film by an appropriate adhesive either in a random fashion or by using a pattern or template to deposit the particles in selected areas. Foamimg material then is poured into the mold and at least partially cured to form the cushion body 12 integral with the covering 14. The covering is then heated sufficiently for the heat absorptive particles to melt film 18 and form air flow passages 22 through the film. A pressure differential can also be applied across the film during the heating step.

- 7 -                                                                                    **0141556**

Figure 5 illustrates a second manner for incorporating heat absorptive particles 20 into the film for absorbing heat and effectively forming air passages through the covering of the cushion. More particularly, the covering in this embodiment includes outer fabric layer 16 and an inner laminated film comprising two film layers 24a and 24b. The heat absorptive particles 20 are deposited between film layers 24a and 24b to form a laminated film sandwiching the particles therebetween. Again, the particles can be applied in a random fashion or in a specified pattern using a template or the like. The laminated film and particles are fabricated as a unitary or integral laminated film which then is laminated to outer fabric layer 16. The film layers, being air impervious, then can be vacuum drawn into the mold to conform to the interior shape of the mold as described above. The particles then are heated, as described above, to a temperature sufficient for the heat absorptive particles to melt both film layers 24a and 24b and thereby form air flow passages therethrough.

Further methods for applying heat absorptive particles to a meltable film layer will be readily apparent to those skilled in the art. For example, the particles can be made as an integral part of the film during fabrication. Of course, the air impervious nature of the film must be maintained to permit the covering to be vacuum drawn into the mold.

Both aluminum and iron granules or powders have proven effective for use as heat absorptive particles 20. For instance, Fine XX Aluminum Grain granules manufactured by Alcoa have been used to effectively create air flow passages 22. As stated above, heat absorptive substances can be painted or printed on the film. Thus, a wide variety of heat absorptive mediums can be used for providing a vehicle to create the porosity in the film. Moreover, the heat can be applied in a wide variety of methods, such as induction, radiation, convection, or the like. A particularly advantageous heating technique is short duration, localized heating of the particles by high energy microwaves.

Thus, it can be seen that a novel process and article have been provided for forming a cushion article having a cover and wherein the article is provided with increased air flow capabilities. The covering for the cushion begins as an air impervious structure and ends up as a structure providing air flow comfort in areas that can be controlled as desired. Furthermore, the development of porosity in the film is carried out simply by applying heat to the heat absorptive particles sufficient to melt the air impervious film of the covering. No extraneous steps, such as puncturing the covering, are necessary.

It will be understood that the invention may be embodied in other specific forms without departing from the spirit or central characteristics thereof. The present examples and embodiments, therefore, are to be considered in all respects as illustrative and not restrictive,, and the invention is not to be limited to the details given herein.

CLAIMS

1.    A process for developing porosity in air impervious film, comprising the steps of:

providing an air impervious film having heat absorptive particles; and

heating the particles sufficiently to produce holes in the film in the areas adjacent the particles to form air flow passages through the film.

2.    The process of claim 1 wherein the film is a thermoplastic material and the particles are heated sufficiently to melt portions of the film adjacent the particles.

3.    The process of claim 1, including the steps of applying an adhesive material to the film and depositing the heat absorptive particles on the adhesive to maintain the particles in contact with the film.

4.    The process of claim 1 wherein said film is laminated with a plurality of meltable layers having said heat absorptive particles deposited therebetween.

5.    The process of claim 1 wherein said film is fabricated of plastic material and the heat absorptive particles are formed integral with the film.

6.    The process of claim 1 wherein said heat absorptive particles are metal.

7.    The process of claim 1 wherein the particles are heated by high energy microwaves.

**0141556**

8.    A process for fabricating a cushion article having a cover provided with air flow capabilities, comprising the steps of:

providing a cushion body;

providing a covering for at least part of the cushion article, the covering including an air impervious meltable film having heat absorptive particles thereon in at least a selected area thereof; and

heating the particles to a temperature sufficient to melt the film adjacent the particles and form air flow passages through the film.

9.    The process of claim 8, including the steps of applying an adhesive material to the film and depositing the heat absorptive particles on the adhesive to maintain the particles in contact with the film.

10.    The process of claim 8 wherein said cover includes an outer fabric layer bonded to the outside of said film.

11.    The process of claim 8 wherein said heat absorptive particles are bonded to the inside of the film.

12.    The process of claim 8, including the steps of applying an adhesive material to the film and depositing the heat absorptive particles on the adhesive to maintain the particles in contact with the film.

13.    The process of claim 8 wherein said film is fabricated of plastic material and the heat absorptive particles are formed integral with the film.

14.    The process of claim 8 wherein said film is laminated with a plurality of meltable layers having said heat absorptive particles deposited therebetween.

15.    The process of claim 8 wherein said heat absorptive particles are metal.

- 11 -

**0141556**

16. A process for fabricating a cushion article having a cover provided with air flow capabilities, comprising the steps of:

providing a mold having the shape of the desired cushion article;

providing a covering for at least part of the cushion article, the covering including an air impervious thermoplastic film having heat absorptive particles thereon in at least a selected area thereof;

vacuum drawing the covering into the mold;

pouring foaming material into the mold and at least partially curing the foaming material to form a cushion body within the covering; and

heating the particles to a temperature sufficient to melt the film adjacent the particles and form air flow passages through the film.

17. The process of claim 16, including the steps of applying an adhesive material to the film and depositing the heat absorptive particles on the adhesive to maintain the particles in contact with the film.

18. The process of claim 16 wherein said cover is provided with an outer fabric layer bonded to the ouside of said film.

19. The process of claim 16 wherein said heat absorptive particles are bonded to the inside of the film.

20. The process of claim 16, including the steps of applying an adhesive material to the film and depositing the heat absorptive particles on the adhesive to maintain the particles in contact with the film.

21. The process of claim 16 wherein said heat absorptive particles are formed integral with the film.

22. The process of claim 16 wherein said film is laminated with a plurality of meltable layers having said heat absorptive particles deposited therebetween.

23. The process of claim 16 wherein said heat absorptive particles are provided of metallic granules.

0141556

24. A process for fabricating a seat cushion or the like having a cover provided with air flow capabilites, comprising the steps of:

providing a mold having the shape of a desired seat cushion;

providing a covering for the seat cushion, the covering including an outer fabric layer bonded to an inner air impervious meltable film having heat absorptive particles thereon in at least selected areas of the seat cushion;

vacuum drawing the covering into the mold;

pouring foaming material into the mold and at least partially curing the foaming material to form a cushion body within the covering; and

heating the particles to a temperature sufficient to melt the film adjacent the particles and form air flow passages through the film.

25. The process of claim 24, including the steps of applying an adhesive material to the film and depositing the heat absorptive particles on the adhesive to maintain the particles in contact with the film.

26. The process of claim 24 wherein said heat absorptive particles are bonded to the inside of the film.

27. The process of claim 24, including the steps of applying an adhesive material to the film and depositing the heat absorptive particles on the adhesive to maintain the particles in contact with the film.

28. The process of claim 24 wherein said film is fabricated of plastic material and the heat absorptive particles are formed integral with the film.

29. The process of claim 24 wherein said film is laminated with a plurality of meltable layers having said heat absorptive particles deposited therebetween.

30. The process of claim 24 wherein said heat absorptive particles are provided of metallic granules.

31. A molded seat cushion or the like which has a cover provided with air flow capabilities, comprising:

a foam body molded in the shape of a desired seat cushion; and

a covering for the foam body, including an outer fabric layer and an air impervious inner film having heat absorptive particles thereon, and air passages through the film in the areas of said particles and formed therein by heating the particles.

32. The molded seat cushion of claim 31 wherein said film is fabricated of thermoplastic material and said heat absorptive particles are metal.

33. The molded seat cushion of claim 31 wherein said heat absorptive particles are bonded to said film.

34. The molded seat cushion of claim 31 wherein said film is laminated with a plurality of meltable layers having said heat absorptive particles disposed therebetween.

35. The molded seat cushion of claim 31 wherein said film is fabricated of plastic material and the heat absorptive particles are formed integral with the film.

FIG. 1

FIG. 2

FIG. 3

FIG. 4

FIG. 5